Europäisches Patentamt

European Patent Office

Office européen des brevets

(19)

(11) Veröffentlichungsnummer: **0 229 921**
**B1**

(12) EUROPÄISCHE PATENTSCHRIFT

(45) Veröffentlichungstag der Patentschrift: 23.01.91

(51) Int. Cl.⁵: **C 03 C 17/36**

(21) Anmeldenummer: 86116068.7

(22) Anmeldetag: 20.11.86

(54) Verfahren zum Herstellen von Scheiben mit hohem Transmissionsverhalten im sichtbaren Spektralbereich und mit hohem Reflexionsverhalten für Wärmestrahlung.

(30) Priorität: 06.12.85 DE 3543178

(43) Veröffentlichungstag der Anmeldung:
29.07.87 Patentblatt 87/31

(45) Bekanntmachung des Hinweises auf die
Patenterteilung:
23.01.91 Patentblatt 91/04

(84) Benannte Vertragsstaaten:
AT BE CH DE ES FR GB IT LI LU NL SE

(56) Entgegenhaltungen:
EP-B- 35 906        US-A-4 650 557
CH-A- 400 714      US-E- 25 711
GB-A-2 135 697

CHEMICAL ABSTRACTS, Band 93, Nr. 24,
Dezember 1980, Seite 252, Zusammenfassung
Nr. 224625r, Columbus, Ohio, US

Die Akte enthält technische Angaben, die nach
dem Eingang der Anmeldung eingereicht
wurden und die nicht in dieser Patentschrift
enthalten sind.

(73) Patentinhaber: LEYBOLD
AKTIENGESELLSCHAFT
Wilhelm-Rohn-Strasse 25
D-6450 Hanau am Main 1 (DE)

(72) Erfinder: Dietrich, Anton, Dr.
Heilbrunn 16
D-8441 Wiesenfelden (DE)
Erfinder: Hartig, Klaus, Dr.
Hanauerstrasse 17
D-6451 Ronneburg 2 (DE)
Erfinder: Szczyrbowski, Joachim, Dr.
Ringofenstrasse 5,
D-8758 Goldbach (DE)

(74) Vertreter: Zapfe, Hans, Dipl.-Ing.
Am Eichwald 7
D-6056 Heusenstamm 2 Rembrücken (DE)

**Beschreibung**

Die Erfindung betrifft ein Verfahren zum Herstellen von Scheiben mit hohem Transmissionsverhalten im sichtbaren Spektralbereich und mit hohem Reflexionsverhalten für Wärmestrahlung durch Beschichtung von aus Mineralglas bestehenden Substraten mit

a) einer ersten Schicht aus einem Oxid aus der Gruppe Zinnoxid, Siliziumdioxid, Aluminiumoxid, Tantaloxid und Zirkonoxid oder deren Mischoxide, mit

b) einer zweiten Schicht aus einem Metall aus der Gruppe Tantal, Wolfram, Nickel und Eisen oder Legierungen mit mindestens 50 Gewichtsprozent Anteil eines dieser Metalle, mit

c) einer dritten Schicht aus Silber oder einer Silberlegierung mit mindestens 50 Gewichtsprozent Silberanteil, mit

d) einer vierten Schicht aus einem Metall aus der die zweite Schicht bildenden Gruppe und mit

e) einer fünften Schicht aus einem Oxid aus der die erste Gruppe bildenden Oxide.

Derartige Scheiben sollen einen möglichst großen Anteil des sichtbaren Lichts durchlassen und einen möglichst großen Anteil des nicht sichtbaren spektralen Anteils der Sonnenstrahlung zurückhalten. Diese Maßnahme soll im Sommer verhindern, daß die unerwünschte Wärmestrahlung des Sonnenlichts in Räume eindringt. Besonders bei Kraftfahrzeugen ist dieser Effekt wegen der schräggestellten und dadurch sehr großen Front- und Heckscheiben besonders unerwünscht.

Durch die DE—A—33 07 661 und die EP—A—104 870 ist es bekannt, eine Silberschicht und eine unmittelbar auf das Silber aufgebrachte sehr dünne Metallschicht zwischen zwei Oxidschichten einzuschliessen, wobei die dünne Metallschicht die Silberschicht gegen einen chemisch-thermischen Angriff beim Herstellen der obersten Oxidschicht schützt. Setzt man ein derartiges Schichtsystem jedoch Temperaturen oberhalb 150°C aus, so erfolgt eine Diffusion des Silbers in die angrenzende Oxid- und/oder Metallschicht, wobei ein starker Anstieg des Flächenwiderstandes und eine entsprechende Verringerung der Transmissionswerte des Schichtsystems zu beobachten ist, d.h. zwei der wesentlichen Eigenschaften des Schichtsystems werden verschlechtert.

Durch die EP—B—35 906 ist es bekannt, auf einer Seite oder beiden Seiten einer Silberschicht eine dünne metallische Schicht anzuordnen und dieses Schichtsystem gleichfalls zwischen zwei Oxidschichten einzubetten. Durch die dünne metallische Schicht soll eine größere Langzeitstabilität erreicht werden, wobei sich die Untersuchungen jedoch auf einen Temperaturbereich bis 120°C beschränken. Da weiterhin durch das Absorptionsverhalten der metallischen Schichten eine Verschlechterung der optischen Transparenz der beschichteten Substrate eintritt, ist die Gesamtdicke der metallischen Schichten zur Erzielung eines bestimmten Transmissionsverhaltens begrenzt, und es soll daher bevorzugt nur eine einzige metallische Schicht auf der dem Substrat abgewandten Seite der Silberschicht angebracht werden, damit die Verschlechterung der Transmissionswerte in Grenzen gehalten werden kann. Es hat sich jedoch bei Verwendung von Substraten aus Mineralglas und einem derartigen Schichtsystem gezeigt, daß bei einer Erwärmung auf Temperaturen merklich oberhalb 150°C gleichfalls eine Verschlechterung der Schichteigenschaften eintrat, und zwar nicht nur durch eine an sich wünschenswerte Erhöhung der Transmissionswerte im sichtbaren Bereich, sondern gleichzeitig auch durch einen unerwünschten Anstieg des Flächenwiderstandes, so daß die Bordspannung eines normalen Kraftfahrzeugs nicht mehr ausreicht, um im Winter eine ausreichende Beheizung durchzuführen. Weiterhin wurden Flecken und unerwünschte Lichtstreuungen beobachtet, die offensichtlich auf eine teilweise Anglomeratbildung sowie auf eine teilweise Diffusion des Silbers in die Oxidschichten hinein zurückzuführen ist.

Dieses Verhalten läßt nur den Schluß zu, daß die Dicke der metallischen Schicht bzw. Schichten im Hinblick auf die angestrebten hohen Transmissionswerte im sichtbaren Bereich, die teilweise auf gesetzliche Vorschriften zurückzuführen sind (Kraftfahrzeugscheiben) für einen wirksamen Schutz der Silberschicht insbesondere bei höheren Temperaturen nicht mehr ausreichend ist.

Es ist bekannt, gekrümmte oder gewölbte Scheiben mit annähernd ähnlichem spektralen Verhalten dadurch herzustellen, daß man eine in andere Schichten eingebettete Silberschicht auf bereits verformte Glassubstrate aufbringt. Dies setzt jedoch spezielle Beschichtungsanlagen voraus, die der unterschiedlichen Formgebung der Substrate Rechnung tragen und durch komplizierte Blendenanordnungen die Einflüsse unterschiedlicher Abstände von Flächenelementen des Substrats von den Beschichtungsquellen und unterschiedlicher Auftreffwinkel des Schichtmaterials kompensieren.

Durch die US—E—25 711 und die US—A—4 650 257 ist es auch bereits bereits bekannt, Automobil-Windschutzscheiben zuerst zu beschichten und danach in die gewünschte Form zu biegen.

Bei der US—E—25 711 erfolgt das Biegen einer Scheibe, die mit einer Einfachschicht aus Zinn-Oxid belegt ist. Diese Schicht soll nicht dazu dienen, der Scheibe die Eigenschaften eines optischen Filters im Sinne einer Infrarot-Reflexion zu verleihen, sondern dazu, die Scheibe elektrisch leitfähig zu machen, damit sie bei ungünstigen Witterungsbedingungen beheizt werden kann.

Schichten aus Oxiden wie z.B. aus Zinnoxid haben dabei die Eigenschaft, daß ihre elektrische Leitfähigkeit der Transparenz umgekehrt proportional ist. Ist nämlich die betreffende Schicht nicht voll durchoxidert so besitzt sie aufgrund der metallischen Anteile eine bessere elektrische Leitfähigkeit jedoch gleichzeitig eine Minderung der Transparenz für sichtbares Licht da der metallische Anteil in der Schicht absorbierend auf die optische Strahlung wirkt, allerdings nicht im Sinne einer Infrarot-Filterung. Eine nachträgliche Temperaturbehandlung in Anwesenheit von Sauerstoff dient dazu, die Transparenz zu verbessern, wobei dies der Forderung entgegensteht, keinen allzu hohen Flächenwiderstand zu erhalten. Es ist in der Regel aber nicht möglich, eine solche Scheibe mit der üblichen Bordspannung von 12 Volt zu beheizen.

Die US—A—4 650 557 offenbart zu im wesentlichen den gleichen Zwecken eine Einfachschicht aus Indium-Zinn-Oxid, der von Haus aus eine bessere Leitfähigkeit innewohnt.

Dennoch wird auch hierbei bereits eine Versorgungsspannung von 60 Volt benötigt, die nicht der üblichen Bordspannung eines Kraftfahrzeuges entspricht. Bei beiden in dieser Schrift beschriebenen Prozessen werden zur Erhöhung der Transparenz im sichtbaren Bereich mindestens zwei Öfen benötigt, in denen ein Tempern, das erforderliche Biegen und schließlich eine Reduktionsbehandlung durchgeführt wird, um den beim Biegen erfolgten Verlust an elektrischer Leitfähigkeit durch den Reduktionsvorgang wieder auszugleichen. Soweit es sich um ein Verfahren mit einer zweistufigen Temperaturbehandlung handelt, wird der Biegevorgang in einer reduzierenden Atmosphäre durchgeführt, was allerdings einen mit Schleuseneinrichtungen versehenen Ofen erfordert.

Der Erfindung liegt daher die Aufgabe zugrunde, ein Verfahren der eingangs beschriebenen Gattung anzugeben, mit dem gekrümmte oder gewölbte Scheiben mit einer vorgegebenen Filtercharakteristik auf wirtschaftlichere Weise hergestellt werden können.

Die Lösung der gestellten Aufgabe erfolgt bei dem eingangs beschriebenen Verfahren erfindungsgemäß dadurch, daß man

f) die Schichten b) und d) in einer Dicke aufbringt, die zu einer größeren Absorption im sichtbaren Bereich führt, als dies dem Endzustand entspricht, und

g) das Substrat mit dem genannten Schichtpaket a) bis e) in oxidierender Atmosphäre auf mindestens die Erweichungstemperatur des Glases erwärmt und die Temperaturbehandlung solangefortsetzt, bis die mittlere Transmission im sichtbaren Bereich gegenüber derjenigen vor der Temperaturbehandlung um mindestens 5% vorzugsweise um mindestens 8% zugenommen hat, und während dieser Temperaturbehandlung das Substrat mit dem Schichtpaket in erwärmtem Zustand plastisch verformt und in verformtem Zustand abkühlt.

Es wurde überraschend festgestellt, daß die bereits in der angegebenen Weise beschichteten Scheiben nicht nur bis auf die Erweichungstemperatur des Mineralglases von etwa 640°C aufgeheizt werden können, sondern daß sie zusammen mit dem bereits aufgebrachten Schichtsystem bei derartigen Temperaturen plastisch verformt, d.h. gebogen, und/oder durch Abschrecken gehärtet werden können, ohne daß sich die Schichteigenschaften verschlechtern oder das Schichtsystem sich gar ablöst. Diese Eigenschaft war nicht vorhersehbar, da die bekannten Schichtsysteme bereits bei Überschreiten einer Temperatur von etwa 150°C ihre wesentlichen Eigenschaften verloren.

Die Möglichkeit, bereits beschichtete Scheiben zu biegen, vorzugsweise für die Verwendung bei Automobilverglasungen, führt zu dem ganz erheblichen Vorteil, daß die Beschichtung in herkömmlichen Vakuumanlagen erfolgen kann, beispielsweise durch Vakuumaufdampfen und/oder Katodenzerstäubung, und daß die Scheiben nach dem Verlassen der Vakuumanlage in dem abschließenden Verfahrensschritt an Luft gebogen und/oder gehärtet werden können, ohne die gezielt eingestellten Eigenschaften des beschichteten Glases nachteilig zu verändern. Dieser Vorteil ist insofern nicht zu unterschätzen, als die Handhabung von gebogenen Scheiben in Vakuumanlagen beträchtliche Probleme mit sich bringt und das Beschichten von stark gekrümmten Teilen dann problematisch ist, wenn das Schichtmaterial nicht mehr im wesentlichen im rechten Winkel auf das Substrat bzw. die Glasscheibe auftrifft.

Bei dem erfindungsgemäßen Verfahren wird die Silberschicht nicht nur auf beiden Seiten von Metallschichten aus Tantal, Wolfram, Nickel, Eisen oder Legierungen mit diesen Metallen geschützt, sondern diese Metallschichten können auch in einer solchen Dicke aufgebracht werden, daß sie — ohne den Schritt der reaktiven Temperaturbehandlung — Transmissionswerte im sichtbaren Bereich aufweisen, die für den geforderten Endzweck eindeutig zu gering sind. Derartige, vergleichsweise dicke Schichten aus den genannten Metallen Tantal, Wolfram, Nickel und/oder Eisen üben jedoch auch bei einer Temperaturbehandlung von deutlich oberhalb 150°C eine ausgezeichnete Schutzwirkung aus, so daß das ansonsten zu beobachtende Fleckigwerden und die Lichtstreuung unterbleiben.

Durch die Temperaturbehandlung in oxidierender Atmosphäre oberhalb der Erweichungstemperatur des Glases werden die (anfänglich zu niedrigen) Transmissionswerte im sichtbaren Bereich deutlich angehoben und auf einen Wert gebracht, der dem geforderten Verwendungszweck der betreffenden Scheiben entspricht.

Bei den erfindungsgemäßen Scheiben kann unter Beibehaltung der Mindest-Transmissionswerte im sichtbaren Spektralbereich die mittlere durchgelassene Sonnenenergiestrahlung auf Werte unter 50% gesenkt werden, wobei der überwiegende Teil der Sonnenstrahlung reflektiert wird, also zu keiner Erwärmung der Scheibe beiträgt, wie dies bei in der Masse gefärbten Gläsern oder aufgebrachten Folien der Fall ist.

Ein weiterer Vorteil der erfindungsgemäßen Scheiben besteht darin, daß infolge des geringen Flächenwiderstandes der Silberschicht über entsprechende Kontakte eine elektrische Spannung an die Scheibe angelegt werden kann, so daß z.B. bei einer Vereisung des Glases ein schnelles Abtauen herbeigeführt werden kann. So wurde beispielsweise bei dem erfindungsgemäßen Verfahren vor der oxidativen Temperaturbehandlung ein höherer Flächenwiderstand gemessen, nach der oxidativen Temperaturbehandlung jedoch ein geringerer Flächenwiderstand. Diese Erniedrigung des

3

Flächenwiderstandes ist ein genau umgekehrter Effekt, wie er bei einem Diffusionsvorgang auftreten würde, und offensichtlich auf einen Rekristallisationsvorgang zurückzuführen. Bei einem Diffusionsvorgang ist nämlich eine Erhöhung des Flächenwiderstandes zu erwarten. Mit Flächenwiderständen unterhalb von etwa 5 Ohm/□ ist aber eine Beheizung durch die übliche Bordspannung von 12 V ohne weiteres möglich.

Durch die beidseitige Einbettung der Silberschicht zwischen Metallschichten relativ großer Dicke wird erreicht, daß die Silberschicht gegen die Diffusion von Sauerstoff aus den gleichfalls beidseitigen Oxidschichten wirksam geschützt wird. Die betreffenden Metallschichten werden dabei vorzugsweise in einer möglichst sauerstoffarmen bzw. sauerstoff-freien Atmosphäre aufgebracht, da Schichten, die von Anfang bereits teilweise oxidiert sind, eine zu hohe Porosität aufweisen und ihre Wirkung als Diffusionssperre nicht erfüllen können. Durch die nachfolgende oxidative Temperaturbehandlung wird die ursprünglich zu geringe Transmission jedoch wieder auf die vorgeschriebenen Werte erhöht, und zwar dadurch, daß die an der Silbersschicht anliegenden dünnen metallischen Schichten mindestens teilweise in ihre Oxide umgewandelt werden, was durch die Anwesenheit von Sauerstoff bei Temperaturen von mindestens etwa 640°C mit ausreichend langsamer Geschwindigkeit geschieht. Dies bedeutet, daß die genaue Dicke der an der Silberschicht anliegenden metallischen Schichten für eine bestimmte Wärmebehandlung im Versuch ermittelt werden muß. Die Einstellung der Schichtdicken für die Schichten b) und d) erfolgt durch optische Messungen am Zwischenprodukt, d.h. vor der Temperaturbehandlung und durch entsprechende Wahl der Niederschlagsrate und der Beschichtungsdauer, d.h. durch entsprechende Variation dieser Beschichtungsparameter nach Maßgabe der Schichteigenschaften nach der Temperaturbehandlung. Anders ausgedrückt besagt dies, daß man aufgrund der Einwirkung der Temperaturbehandlung den Ausgangszustand vorausberechnen muß, um nach der Temperaturbehandlung das gewünschte Endergebnis zu erhalten. Dabei weisen die betreffenden metallischen Schichten vorzugsweise eine unterschiedliche Dicke auf, da sie wegen der unterschiedlich langen Diffusionswege auch unterschiedlichen Oxidationsbedingungen ausgesetzt sind.

Die Silberschicht kann dabei eine reine Silberschicht sein, jedoch kann das Silber beispielsweise auch mit Kupfer (maximal 20 Gewichtsprozent), Palladium (maximal 30 Gewichtsprozent) und Platin (maximal 20 Gewichtsprozent) legiert sein.

Es hat sich außerdem gezeigt, daß durch die Temperaturbehandlung ganz offensichtlich eine Ausheilung von Defekten in der Silberschicht möglich ist und eine deutliche Verbesserung der optischen und elektrischen Daten der fertigen Scheibe erreicht wird.

Es ist besonders vorteilhaft, der fünften Schicht, d.h. der obersten Oxidschicht, Anteile von 4 bis 8 Gewichtsprozent Antimon oder Fluor oder von 5 bis 15 Gewichtsprozent Zinn zuzusetzen, um die Kontaktierung der elektrisch leitfähigen Schichten durch einen Lötvorgang zu erleichtern.

Die einzelnen Schichten, insbesondere die oxidischen Schichten a) und e) können auch aus Teilschichten aufgebaut sein, d.h. eine Schichtenfolge aus zwei unterschiedlichen Oxiden bzw. Oxidgemischen wird als eine Schicht aufgefaßt, auch wenn sie in sich inhomogen ist.

Weitere vorteilhafte Ausgestaltungen des Erfindungsgegenstandes sowie das Verfahrensprodukt sind in den übrigen Unteransprüchen aufgeführt.

Ein Ausführungsbeispiel des Erfindungsgegenstandes wird nachfolgend anhand der Figuren 1 bis 3 näher erläutert.

Es zeigen.

Figur 1 einen Schnitt durch ein Schichtsystem mit insgesamt fünf Schichten,

Figur 2 Transmissions- und Reflexionskurven vor der oxidativen Temperaturbehandlung, und

Figur 3 Transmissions- und Reflexionskurven nach der oxidativen Temperaturbehandlung.

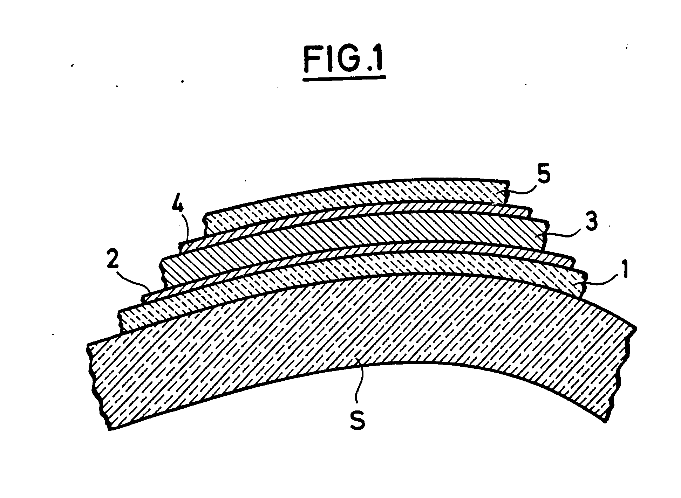

In Figur 1 ist mit S das Substrat bezeichnet, das aus einem Mineralglas wie beispielsweise einem üblichen Float-Glas wie einem Natrium-Silikat-Glas besteht. Auf dieses Substrat ist eine erste Schicht 1 aus einem Oxid aus der Gruppe Zinnoxid, Siliziumdioxid, Aluminiumoxid, Tantaloxid, Zirkonoxid oder deren Mischoxide aufgebracht. Darauf befindet sich eine zweite Schicht 2 aus einem Metall aus der Gruppe Tantal, Wolfram, Nickel und Eisen oder Legierungen mit Anteilen dieser Metalle. Als nächstes folgt eine dritte Schicht 3 aus Silber oder einer Silberlegierung mit mindestens 50 Gewichtsprozent Silberanteil, und hierauf wiederum eine vierte Schicht 4 aus einem Metall aus der Gruppe Tantal, Wolfram, Nickel, Eisen oder Legierungen mit mindestens 50 Gewichtsprozent Anteil eines dieser Metalle, und als Abschluß- oder Deckschicht folgt eine fünfte Schicht 5, die wie die erste Schicht wiederum aus einem Oxid aus der Gruppe Zinnoxid, Siliziumdioxid, Aluminiumoxid, Tantaloxid, Zirkonoxid oder deren Mischoxide besteht. Es versteht sich, daß im Hinblick auf die dritte Schicht 3 aus Silber kein symmetrischer Schichtaufbau vorliegen muß, sondern daß die Schichtmaterialien innerhalb der in einer Gruppe angegebenen Metalle bzw. Oxide auch variiert werden können.

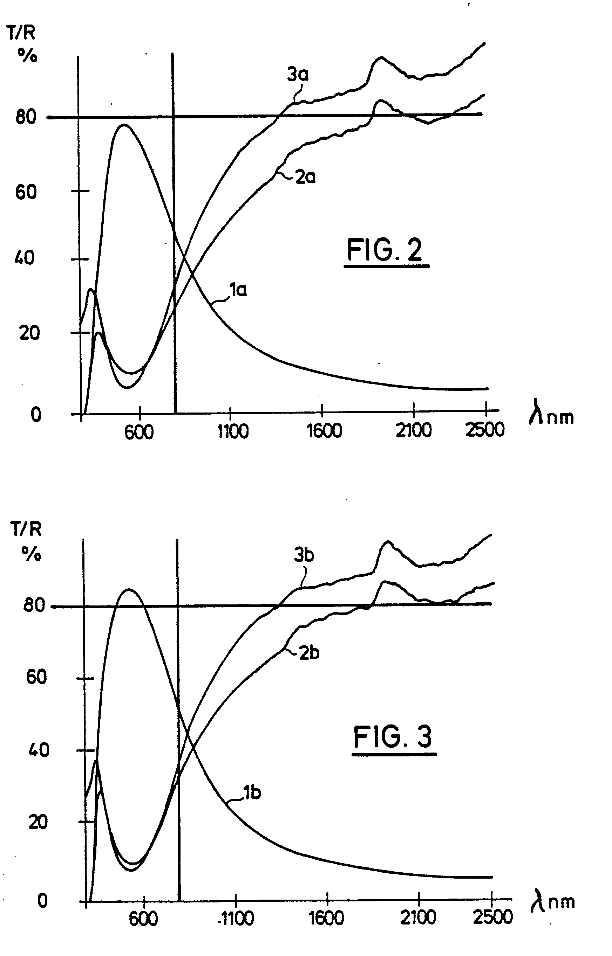

In den Figuren 2 und 3 sind auf der Ordinate die Transmissionswerte T bzw. die Reflexionswerte R in Prozent aufgetragen. Bei T bzw. R = 80% ist eine horizontale Linie eingetragen.

In den Figuren 2 und 3 stehen die Kurven 1a und 1b für die Transmissionswerte T, die Kurven 2a und 2b für die Reflexionswerte R auf der Glasseite und die Kurven 3a und 3b für die Reflexionswerte R auf der Schichtseite. Es ist deutlich zu erkennen, daß das Transmissionsmaximum im sichtbaren Bereich zwischen 500 und 550 nm durch die oxidative Temperaturbehandlung von etwa 78% auf 85% angestiegen ist. Auch die Reflexionswerte haben sich merklich verbessert.

Beispiel 1

In einer Vakuum-Beschichtungsanlage der Firma Leybold-Heraeus GmbH mit der Typenbezeichnung A 1100 Z3H/4 für Flachglas, die mit Hochleistungszerstäubungskatoden (Magnetronkatoden) ausgerüstet war, wurden Glasscheiben aus Floatglas mit den Abmessungen $1200 \times 800 \times 2$ mm³ mit einer Schichtfolge $SnO_2$-Ni-Ag-Ni-$SnO_2$ gemäß Figur 1 beschichtet, wobei die einzelnen Schichten folgende Dicken aufwiesen:

Schicht 1: $SnO_2$ 35 nm
Schicht 2: Ni (x)
Schicht 3: Ag 20 nm
Schicht 4: Ni (x)
Schicht 5: $SnO_2$ 35 nm

(x) Experimentell angepaßt, so daß die maximale Transmission des Zwischenproduktes (d.h. vor der Temperaturbehandlung) im sichtbaren Bereich 67% betrug.

Im Anschluß daran wurde die beschichtete Scheibe für die Dauer von 5 Minuten in einem Temperofen bei gleichmäßiger Temperaturverteilung an Luft einer Temperatur von 640°C ausgesetzt, wobei eine Krümmung des Glases erfolgte. Aus den Meßdaten war ersichtlich, daß durch die oxidative Temperaturbehandlung die optischen Transmissionswerte im sichtbaren Spektralbereich um ca. 8% erhöht wurden und der Flächenwiderstand um 1,0 Ohm/□ herabgesetzt wurde. Dies bedeutet, daß die angestrebten Eigenschaften der Scheibe durch die oxidative Temperaturbehandlung deutlich verbessert wurden.

Beispiel 2

Auf die gleiche Weise wie in Beispiel 1 wurde das nachstehend angegebene Schichtsystem hergestellt:

Schicht 1: $SnO_2$ 35 nm
Schicht 2: Ta (x)
Schicht 3: Ag 25 nm
Schicht 4: Ta (x)
Schicht 5: $SnO_2$ 35 nm.

(x) Experimentell angepaßt, so daß die maximale Transmission im sichtbaren Bereich 77% betrug. Die optischen Daten des noch nicht getemperten Schichtpakets sind in Figur 2 dargestellt, und zwar wie angegeben, die Transmission T und die Reflexion R auf der Schichtseite und auf der Glasseite. Die betreffenden Messungen wurden an einem Spektralfotometer vom Typ Lambda 9 der Firma Perkin Elmer durchgeführt, das für die Reflexionsmessungen mit einer Ulbrichtschen Kugel ausgerüstet war. Weiterhin wurden aus den gemessenen Daten nach DIN 67507 die Lichttransmission und die Sonnenenergietransmission berechnet (Tabelle). Die nach der gleichen oxidativen Temperaturbehandlung wie in Beispiel 1 und nach dem Abkühlen der Scheibe erneut gemessenen optischen Daten sind in Figur 3 dargestellt.

Die spektrale Abhängigkeit der Transmissions- und Reflexionswerte entsprach dabei im wesentlichen den Kurven in Figur 3. Auch hier ergab sich durch die oxidative Temperaturbehandlung eine Erhöhung des maximalen Transmissionswertes von 75% auf 83% und eine Herabsetzung des Flächenwiderstandes von 4,7 Ohm/□ auf 2,5 Ohm/□. Weiterhin ergab sich, daß nach der Temperaturbehandlung 34% der Sonnenenergiestrahlung reflektiert und nur etwa 15% absorbiert wurden so daß die gesamte Sonnenenergietransmission auf 50% begrenzt wurde.

Tabelle

| Wellenlängen-bereich | Transmission % | | Reflexion Glasseite % | | Reflexion Schichtseite % | | Absorption Glasseite % | | Absorption Schichtseite % | |
|---|---|---|---|---|---|---|---|---|---|---|
| | vor | nach | vor | nach | vor | nach | vor | nach | vor | nach |
| Sichtbares Licht (380-780 nm) | 75,8 | ⌐2,9 | 10,0 | 9,6 | 6,8 | 8,4 | - | - | - | - |
| Sonnenstrahlung (380 - 2500 nm) | 45,4 | 50,8 | 31,2 | 33,9 | 36,7 | 38,8 | 23,4 | 15,3 | 17,9 | 10,4 |
| Ultraviolett (280 - 380 nm) | 24,9 | 41,3 | -- | -- | -- | -- | -- | -- | -- | -- |

EP 0 229 921 B1

## EP 0 229 921 B1

**Patentansprüche**

1. Verfahren zum Herstellen von Scheiben mit hohem Transmissionsverhalten im sichtbaren Spektralbereich und mit hohem Reflexionsverhalten für Wärmestrahlung durch Beschichtung von aus Mineralglas bestehenden Substraten mit
   a) einer ersten Schicht aus einem Oxid aus der Gruppe Zinnoxid, Siliziumdioxid, Aluminiumoxid, Tantaloxid und Zirkonoxid oder deren Mischoxide, mit
   b) einer zweiten Schicht aus einem Metall aus der Gruppe Tantal, Wolfram, Nickel und Eisen oder Legierungen mit mindestens 50 Gewichtsprozent Anteil eines dieser Metalle mit
   c) einer dritten Schicht aus Silber oder einer Silberlegierung mit mindestens 50 Gewichtsprozent Silberanteil, mit
   d) einer vierten Schicht aus einem Metall aus der die zweite Schicht bildenden Gruppe und mit
   e) einer fünften Schicht aus einem Oxid aus der die erste Gruppe bildende Oxide,
   dadurch gekennzeichnet daß man
   f) die Schichten b) und d) in einer Dicke aufbringt, die zu einer größeren Absorption im sichtbaren Bereich führt, als dies dem Endzustand entspricht und
   g) das Substrat mit dem genannten Schichtpaket a) bis e) in oxidierender Atmosphäre auf mindestens die Erweichungstemperatur des Glases erwärmt und die Temperaturbehandlung solange fortsetzt, bis die mittlere Transmission im sichtbaren Bereich gegenüber derjenigen vor der Temperaturbehandlung um mindestens 5%, vorzugsweise um mindestens 8% zugenommen hat, und während dieser Temperaturbehandlung das Substrat mit dem Schichtpaket in erwärmten Zustand plastisch verformt und in verformtem Zustand abkühlt.

2. Verfahren nach Anspruch 1, dadurch gekennzeichnet, daß man den maximalen Transmissionswert im sichtbaren Bereich durch Wahl der Dicke der Schichten b), c) und d) vor der Temperaturbehandlung auf 65—80% einstellt, und ihn durch die Temperaturbehandlung auf 70—85% erhöht.

3. Verfahren nach Anspruch 1, dadurch gekennzeichnet, daß man die Dicke der Schicht c) (Silber) so einstellt, daß sich nach der Temperaturbehandlung ein Flächenwiderstand zwischen 2 und 10 Ohm/Quadrat ergibt.

4. Verfahren nach Anspruch 1, dadurch gekennzeichnet, daß die fünfte Schicht e) aus mindestens einem der genannten Oxide mit Anteilen von 4 bis 8 Gewichtsprozent Antimon oder Fluor oder von 5 bis 15 Gewichtsprozent Zinn versehen wird.

5. Verfahren nach Anspruch 1, dadurch gekennzeichnet, daß man die erste a) und die fünfte Schicht e) durch Katodenzerstäubung von Targets aus den metallischen Oxidbildnern in reaktiver Atmosphäre ($O_2$ und Edelgas) erzeugt und die zweite b), dritte c) und vierte Schicht d) durch Katodenzerstäubung von Targets aus den genannten Metallen bzw. -legierungen in neutraler Atmosphäre (Edelgas).

6. Verfahren nach Anspruch 1, dadurch gekennzeichnet, daß man die zweite b) und die vierte Schicht d) aus mindestens einem der genannten Metalle erzeugt, das mit mindestens einem metallischen Zusatz aus der Gruppe 4b, 5b, 6b und 8 des periodischen Systems versetzt ist, wobei der Gesamtzusatz 15 Gewichtsprozent nicht überschreitet.

**Revendications**

1. Procédé de fabrication de vitres possédant un haut facteur de transmission dans le domaine du spectre visible et un haut facteur de réflexion pour le rayonnement thermique obtenus par revêtement de substrats constitués de verre minéral avec
   a) une première couche constituée d'un oxyde du groupe comprenant l'oxyde d'étain, l'oxyde de silicium, l'oxyde d'aluminium, l'oxyde de tantale et l'oxyde de zirconium ou leurs oxydes mixtes, avec
   b) une deuxième couche constituée d'un métal du groupe comprenant le tantale, le tungstène, le nickel et le fer ou des alliages contenant au moins 50 pour cent en poids de l'un de ces métaux, avec
   c) une troisième couche constituée d'argent ou d'un alliage d'argent contenant au moins 50 pour cent en poids d'argent, avec
   d) une quatrième couche constituée d'un métal du groupe formant la deuxième couche et avec
   e) une cinquième couche constituée d'un oxyde du groupe des oxydes formant le premier groupe ci-dessus, caractérisé
   f) par le fait que l'on rapporte les couches b) et d) dans une épaisseur qui conduit, dans le domaine visible, à une absorption supérieure à celle qui correspond à l'état final et
   g) par le fait que l'on chauffe le substrat, avec le paquet de couches mentionné a) à e), en atmosphère oxydante pour le porter au moins à la température de ramollissement du verre et que l'on poursuit le traitement thermique jusqu'à ce que la transmission moyenne dans le domaine visible ait augmenté d'au moins 5%, de préférence d'au moins 8%, par rapport à celle que l'on avait avant le traitement thermique, et par le fait que pendant ce traitement thermique le substrat, avec le paquet de couches, se met en forme plastiquement à l'état réchauffé et refroidit à l'état mis en forme.

2. Procédé selon la revendication 1, caractérisé par le fait que l'on amène le coefficient de transmission maximal dans le domaine visible, par le choix de l'épaisseur des couches b), c) et d), avant le traitement thermique, à 65-80%, puis que, par le traitement thermique, on l'élève à 70-85%.

7

3. Procédé selon la revendication 1, caractérisé par le fait que l'on définit l'épaisseur de la couche c) (argent) de façon à obtenir, après le traitement thermique, une résistance de surface valant entre 2 et 10 ohms/mètre carré.

4. Procédé selon la revendication 1, caractérisé par le fait que la cinquième couche e) est constituée d'au moins l'un des oxydes mentionnés avec des proportions de 4 à 8 pour cent en poids d'antimoine ou de fluor ou de 5 à 15 pour cent en poids d'étain.

5. Procédé selon la revendication 1, caractérisé par le fait que l'on obtient la première couche a) et la cinquième couche e) par pulvérisation cathodique de cibles à partir des formateurs oxydes métalliques en atmosphère réactive ($O_2$ et gaz rare) et que l'on obtient la deuxième b), la troisième c) et la quatrième couche d) par pulvérisation cathodique de cibles à partir des métaux ou des alliages mentionnés en atmosphère neutre (gaz rare).

6. Procédé selon la revendication 1, caractérisé par le fait que l'on produit la deuxième b) et la quatrième couches d) à partir d'au moins l'un des métaux mentionnés, qui est mélangé avec au moins un additif métallique pris dans le groupe 4b, 5b, 6b et 8 du système périodique, étant précisé que le total de l'additif ne dépasse pas 15 pour cent en poids.

**Claims**

1. Process for the production of panes with a high transmissivity in the visible spectrum and a high reflectivity for heat rays by coating substrates consisting of mineral glass with

   a) a first layer of an oxide from the group of tin oxide, silicon dioxide, aluminium oxide, tantalum oxide and zirconium oxide or their mixed oxides, with

   b) a second layer of a metal from the group of tantalum, tungsten, nickel and iron or alloys with at least 50% by weight of one of these metals, with

   c) a third layer of silver or a silver alloy with at least 50% by weight of silver, with

   d) a fourth layer of a metal from the group forming the second layer and with

   e) a fifth layer of an oxide from the oxides forming the first group,

   characterized in that

   f) the layers b) and d) are applied in a thickness which leads to a greater absorption in the visible region than corresponds to the final state, and

   g) the substrate with the mentioned set of layers a) to e) is heated to at least the softening temperature of the glass, and the temperature treatment continued until the mean transmission in the visible region has increased by at least 5%, preferably by at least 8%, compared with that before the temperature treatment, and during this temperature treatment the substrate with the set of layers is plastically deformed in the heated state and cooled in the deformed state.

2. Process according to Claim 1, characterized in that the maximum transmission value in the visible region is adjusted by selection of the thickness of layers b), c) and d) before the temperature treatment to 65—80% and increased by the temperature treatment to 70 to 85%.

3. Process according to Claim 1, characterized in that the thickness of layer c) (silver) is adjusted so that after the temperature treatment a surface resistivity between 2 and 10 ohm/square results.

4. Process according to Claim 1, characterized in that the fifth layer e) is provided by at least one of the oxides mentioned with concentrations of 4 to 8% by weight of antimony or fluorine or of 5 to 15% by weight of tin.

5. Process according to Claim 1, characterized in that the first and fifth layers, a) and e) respectively, are produced by cathodic sputtering by targets of the metallic oxide-formers in reactive atmosphere ($O_2$ and inert gas), and the second, third and fourth layers, b), c) and d) respectively, by cathodic sputtering by targets of the metals or alloys mentioned in neutral atmosphere (inert gas).

6. Process according to Claim 1, characterized in that the second and fourth layers, b) and d) respectively, are produced from at least one of the metals mentioned, to which is added at least one metallic additive from Groups 4b, 5b, 6b and 8 of the periodic system, the total addition not exceeding 15% by weight.

# FIG.1

FIG. 2

FIG. 3